# EUROPEAN PATENT APPLICATION

(11) **EP 2 434 739 A1**
(43) Date of publication of application: **28.03.2012**
(21) Application number: 10306042.2
(22) Date of filing: 28.09.2010
(51) Int. Cl.: H04M 3/56

(54) **A method and a server for conferencing in a computer network, a computer program and a computer program product**

(71) Applicant: Alcatel Lucent, 75007 Paris (FR)
(72) Inventor: Blommaert, Pieter, 2018 Antwerpen (BE); Lou, Zhe, 2000 Antwerpen (BE)
(74) Representative: Brose, Gerhard

(57) **Abstract**

The invention concerns a method for conferencing in a computer network (100) wherein a terminal (101) previously not connected to a conference is selected to be invited to connect to said conference by a server (102) hosting said conference depending on information from a life feed of said conference and a predetermined event, in particular wherein said predetermined event is stored in a data base.

## Description

### Field of the invention

The invention relates to a method, a server, a computer program and a computer program product for conferencing in a computer network.

### Background

Conferencing systems in computer networks are well-known for example, from the Alcatel-Lucent My Teamwork, Internet protocol multimedia subsystem conferencing solution.

Such conferencing systems typically allow participants to share content, for example multimedia, audio, video or documents, during a conference.

However, such conferencing systems typically make the content available to participants connected already to a conference session when the content is made available only.

### Summary

The object of the invention is thus to provide a method, a server, a computer program and a computer program product that allows connecting a previously not connected terminal to a conference in case a topic relevant for an owner of said terminal is discussed during said conference.

The main idea of the invention is that a terminal previously not connected to a conference is selected to be invited to connect to said conference by a server hosting said conference depending on information from a live feed of said conference and a predetermined event stored in a database. This way a user of said terminal previously not connected to said conference is invited to said conference if a predetermined event indicating subject matter of interest to said user is found within said live feed of said conference.

Advantageously, inviting said terminal comprises the step of sending a message from said server to said terminal and of outputting a signal upon receipt of said message by said terminal.

This way, said user is notified immediately about subject matter of interest being discussed during said conference.

Advantageously, inviting said terminal comprises the step of sending a message from said server to said terminal and of outputting content of said message upon receipt of said message by said terminal.

This way, said user is informed about additional information, for example a summary of said conference's topic or participants of said conference, enhancing the user's ability to decide whether to join said conference or not.

Advantageously, upon receipt of a reply to an invite, said terminal is connected to said conference in a mode determined from said reply. This way, a user of said terminal decides the mode in which he wants to connect to said conference.

Advantageously, said mode permits sending and receiving of content in said conference. This way, said user of said terminal is connected as a new participant able to send and receive content in said conference.

Advantageously, said mode permits receiving of content of said conference only. This way, said user is connected to said conference in a receiving-only mode allowing him to listen or view content without the ability to actively participate in said conference.

Advantageously, said mode permits recording content of said conference. This way, said user is not connected directly to said conference but either said server hosting the conference or said terminal is recording content of said conference, for example for later playback.

Advantageously, upon connecting said terminal to said conference, a new connection is announced by said server to a conference participant. This way, existing conference participants are notified by said server about said user joining said conference.

Advantageously, said life feed of said conference is provided by an input device connected to said server. This way, said live feed is easily obtained, for example from microphones or from a telephone of a telephone conference participant.

Advantageously, selecting said terminal comprises the step of said server receiving said life feed and analyzing said life feed for occurrence of said event in said life feed. This way, said terminal is selected if said event is received in said life feed.

Advantageously, at least part of a content of said life feed is displayed on at least a part of a display of said terminal. This way said life feed or a preview of said life feed is displayed.

Advantageously, a message, in particular sent by said server to said terminal, may include parameters that indicate possible options regarding a content of said life feed received by said terminal, in particular options regarding available resolution of said content. This way the terminal is informed about quality ot the life feed, enhancing display options.

Advantageously, before receipt of a reply to an invite, said terminal is connected to said conference in a mode determined depending on parameters defining preferences of said terminal in particular regarding a resolution of said content. This way a preview of said conference is displayed by said terminal even before connecting said terminal to said conference itself, thus improving the user experience.

Further developments of the invention can be gathered from dependent claims and following description.

### Brief description of the figures

In the following, the invention will be explained further making reference to the attached drawings.
Figure 1 schematically shows a first part of a computer network.
Figure 2 schematically shows a first sequence diagram showing some typical sequences according to a method.

### Description of the embodiments

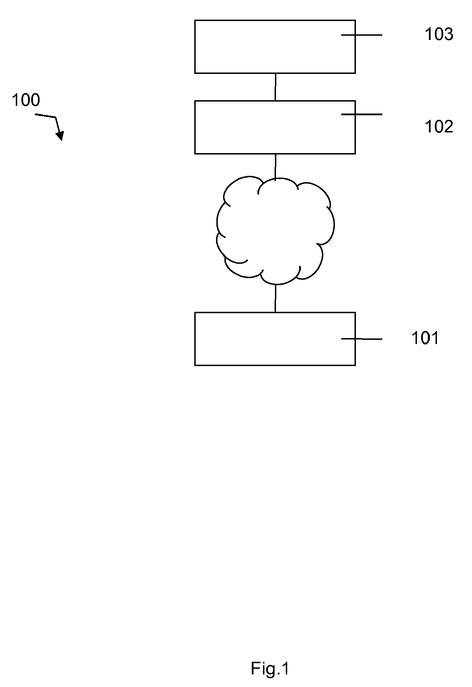

Figure 1 shows a computer network 100 comprising a terminal 101, a server 102, an input device 103 and a first data link connecting said terminal 101 to said server 102. Furthermore, said server 102 and said input device 103 are connected via a second data link.

Said first data link is, for example, an internet protocol multimedia subsystem connection well-known as IMS connection,

Said terminal 101 is, for example, a mobile phone capable of connecting to said computer network 101 using said internet protocol multimedia subsystem connection.

Said server 102 is adapted to host a conference, for example using Alcatel Lucent My Teamwork, and adapted to connect to said computer network 100 via said internet protocol multimedia subsystem connection.

Said input device 103 is, for example, a microphone or a video camera with built-in microphone or a telephone of a telephone conference participant adapted to connect to said server 102 via said second data link.

If said input device 103 is said microphone, said second data link is, for example, a direct link between said microphone and said server 102 using analogue signals.

If said input device 103 is said telephone of a telephone conference participant, said second data link is, for example, said internet protocol multimedia subsystem connection between said telephone and said server 102.

Any other type of protocol suitable for connecting said terminal 101, said server 102 or said input device 103, may be used as said first data link or said second data link respectively. For example, circuit-switched links may be used in case that said terminal 101 or said input devices 103 are telephones capable of connecting to circuit-switched links.

Said server 102 is furthermore adapted to receive a life feed from said input device 103. It is understood that said input device 103 is capable of providing said life feed, for example, as a continuous analogue signal in case said input device 103 is a microphone or as piece of said life feed sent from said input device 103 to said server 102 as data frames according to the internet protocol multimedia subsystem.

Methods for providing said life feed from said input device 103 to said server 102 are well-known to persons skilled in the art, for example, from said internet protocol multimedia subsystem.

Furthermore, said server 102 is adapted to analyse content of said life feed, for example of said data frame, to determine whether a predetermined event occurs within said data frame of said life feed. For example, said server is adapted to read said event from a database and compare said content of said life feed to said event in order to determine whether said event occurs in said data frame.

For example, said server is adapted to perform voice recognition or voice identification of said content received in said data frame of said life feed according to well-known voice recognition or voice identification algorithms.

Furthermore, said server is adapted to determine a first message depending on the result of the analysis of said life feed. For example, said server 102 is adapted to determine a short message service-message, well-known, as SMS, containing the name recognised during voice recognition of a participant of said conference.

Alternatively, said server 102 is adapted to determine a command within said first message adapted to trigger said terminal 101 to output a signal, for example, a ring tone upon receipt of said first message.

Determination of said first message by said server 102 may comprise of steps of identifying said terminal's internet protocol address or phone number from said database.

Said database is adapted to store information about said event and said terminal 101. Said database is, for example, created by an administrator of said server 102 hosting said conference.

Said database, for example, comprises said internet protocol address of said terminal 101 assigned to said event.

Said event is, for example, information useable by said voice recognition or voice identification algorithm to identify that a certain topic is discussed during said conference or a certain person is speaking during said conference.

For example, said information about said event is a word or the name of a participant.

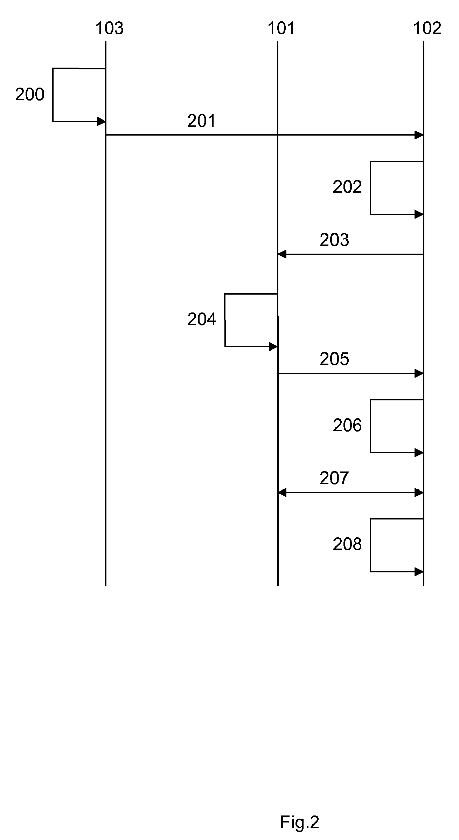

Figure 2 shows a sequence diagram using some typical sequences in a method according to the invention. Said method, for example, starts in case said conference is started on said server 102.

After the start in a step 200, said input device 103 records a piece of said life feed. For example, said input device 103 is said telephone digitally recording said piece of said life feed as said data frame.

After said step 200, said input device 103 sends a message 201 to said server 102. Said message 201 is, for example, said data frame containing said piece of said life feed.

Upon receipt of said message 201 in a step 202, a terminal previously not connected to said conference is selected to be invited to connect to said conference by said server 102 hosting said conference. Said server 102 selects said terminal depending on said information from said life feed of said conference and said predetermined event stored in said database.

For example, said voice recognition or identification algorithm is used to identify a topic or a speaker in said conference that is stored as said event in said database. Furthermore, said terminal 101 assigned to said event in said database is selected by said server 103.

Afterwards, said server 102 sends a message 203 to said terminal 101. For example, said message 203 is said first message inviting said terminal 101 to join said conference. For example, said message 203 is said short message service message or said command prompting said terminal 101 to output said signal.

Upon receipt of said message 203, said terminal 101 outputs said signal or displays said content of said message 203 in a step 204. For example, in said step 204, said terminal 101 displays said content of that short message service message for example on a display of said terminal 101.

Afterwards, said terminal 101 prompts for user feedback, for example, on said display of said terminal 101. Upon receipt of said user feedback, for example, a button on said terminal 101 that is pressed by a user of said terminal 101, said terminal 101 sends a message 205 to said server 102.

Said message 205 is, for example, a message "ACK" indicating that said terminal 101 accepts to join said conference.

Alternatively or additionally said user prompt may ask for a mode selection. In this case said message 205 may comprise of information about said mode selection that was entered by said user during said user feedback in said step 204.

Methods for prompting for user feedback and generating reply messages like said message 205 are well-known to persons skilled in the art.

Upon receipt of said message 205, said server 102 determines said mode for connecting said terminal 101 to said conference from said information about said mode selection.

For example, said server 102 uses a default mode in case said message 205 indicates that said terminal 101 accepts to join said conference without specifying any mode selection.

Alternatively or additionally, said server 102 may analyse said message 205 in order to determine said mode selection comprised in said information about said mode selection in said message 205. In this case, said server 102 may be adapted to connect said terminal 101 to said server 102 depending on said mode selection.

For example, said terminal 101 and said sever 102 are adapted to handle the modes "sending and receiving of content", "receiving of content only" or "recording" as said mode selection and said mode for connecting respectively.

Upon selection of said mode for connecting in step 206, for example in said "sending and receiving of content" or "receiving of content only" mode a connection 207 is established between said terminal 101 and said server 103. Said connection 207 is, for example, said internet protocol multimedia subsystem connection allowing said terminal 101 to send and receive content of said conference.

Alternatively or additionally, in said "recording" mode said server 102 records the content of the conference for later playback. To that end, said content is, for example, stored on a storage and made accessible by a web interface to said terminal 101 at a later point in time. Methods for recording and replaying content of multimedia conferences as well as methods to provide such recorded content at a later point in time are well-known to persons skilled in the art.

Upon establishing said connection 207, said server 102 may be adapted to announce said connection 207, for example, to other terminals connected to said conference. For example, said server 102 is adapted to play an announcement via a loudspeaker or send a message to every terminal connected to said conference.

Said method is, for example, implemented as a computer programme for conferencing in a computer network that causes the computer to invite the terminal that was previously not connected to said conference to connect to said conference depending on information from said life feed of said conference and predetermined event stored in said database.

Furthermore, said method may be a computer programme product comprising a computer-useable medium having a computer-readable programme and said computer-readable programme when executed on a computer causes the computer to perform the steps of said method.

Instead of using voice recognition or voice identification, any other type of multimedia content may be analysed, for example a video frame may provided by said input device 103 and analysed by said server 102 in order to detect faces that are stored as said event in said database. Furthermore documents may be provided by said input device 103 and analysed by said server 102 to identify keywords that are stored as event in said database.

Furthermore, instead of short message service-messages, Really Simple Syndication (RSS2.0) -notifications or any other type of phone alerts may be used.

The invention applies also to more complex computer networks 100, comprising of multiple terminals 101, multiple servers 102 and multiple input devices 103. For example, the input devices 103 may be multiple internet protocol multimedia subsystem telephones capable of connecting to said server 102 in a My Teamwork connection.

In an optional enhancement of said method, streaming of said content of said conference to said terminal 101 may immediately be started in a "preview" or "downscaled" version. For example a downscaled video may be displayed in a small (preview) area, e.g. corner, of said display of said terminal 101. Likewise a scrolling text instead of full audio may be delivered and displayed by said terminal 101.

Optionally full conference streaming may be started without waiting for an explicit confirmation from said terminal 101.

Streaming in this optional enhancement may start or continue for as long as said conference appears useful or as long as it lasts, depending on user preferences or result of said multimedia content analysis.

Optionally said message 203, e.g. said first message may include parameters that indicate possible options regarding the content received by said terminal 101, e.g. resolution of content.

Optionally, said message 205 may include parameters to indicate what exactly is desired, e.g. display of content of said conference in best available resolution or downscaled resolution.

In this optional enhancement said terminal 101 and said server 102 are adapted to determine, send, receive said messages and act upon said parameters accordingly.

Alternatively or additionally, said reply message to said message 203, e.g. said first message, may be sent autonomously by said terminal 101, without said user confirming first. To this end said terminals 101 may be adapted to upon receipt of said message 203, e.g. said first message, determine said message 205, e.g. said message indicating that said terminal 101 accepts said invitation received in said message 203.

Additionally several termination messages may be sent between said server 102, said input device and said terminal 101. For example, when said conference stops, said terminal 101 may be informed of this using an additional message.

In this case, said server is adapted to send said additional message.

Furthermore in this case said terminal 101 is adapted to receive said additional message. Optionally said terminal 101 is in this case may be adapted to clear said prompting for user feedback and this way stop offering to connect.

Optionally said terminal 101 may be adapted to monitor a user input indicating a termination request by said user. For example a button on said terminal 101 may be monitored, and a termination message may be send by said terminal 101 to said server 102 upon detection that said button was pressed. This way requests to disconnect from said conference (in any of abovementioned modes) may be requested by said user.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique, being selectable by the implementer as more specifically understood from the context.

It should be appreciated by those skilled in the art that any block diagrams herein represent conceptual views of illustrative circuitry embodying the principles of the invention. Similarly, it will be appreciated that any sequence diagram and the like represent various processes which may be substantially represented in computer readable medium and so executed by a computer or processor, whether or not such computer or processor is explicitly shown.

A person at skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for conferencing in a computer network (100) wherein a terminal (101) previously not connected to a conference is selected to be invited to connect to said conference by a server (102) hosting said conference depending on information, from a life feed of said conference and a predetermined event, in particular wherein said predetermined event is stored in a data base.

2. The method according to claim 1, wherein inviting said terminal (101) comprises the step of sending a message from said server (102) to said terminal (101), and of outputting a signal upon receipt of said message by said terminal (101).

3. The method according to claim 1, wherein inviting said terminal (101) comprises the step of sending a message from said server (102) to said terminal (101), and of outputting content of said message upon receipt of said message by said terminal (101).

4. The method according to claim 1, wherein upon receipt of a reply to an invite, said terminal (101) is connected to said conference in a mode determined from said reply.

5. The method according to claim 4, wherein said mode permits sending and receiving of content in said conference.

6. The method according to claim 4, wherein said mode permits receiving of content of said conference only.

7. The method according to claim 4, wherein said mode permits recording content of said conference.

8. The method according to claim 1, wherein upon connecting said terminal (101) to said conference, said new connection is announced by said server (102) to a conference participant.

9. The method according to claim 1, wherein said life feed of said conference is provided by an input device (103) connected to said server (102).

10. The method according to claim 1, wherein selecting said terminal (101) comprises of the steps of receiving said lift feed and analyzing said life feed for occurrence of said predetermined event.

11. The method according to claim 1, wherein at least part of a content of said life feed is displayed on at least a part of a display of said terminal (101).

12. The method according to claim 1, wherein a message, in particular sent by said server (102) to said terminal (101), may include parameters that indicate possible options regarding a content of said life feed received by said terminal (101), in particular options regarding available resolution of said content.

13. The method according to claim 1, wherein before receipt of a reply to an invite, said terminal (101) is connected to said conference in a mode determined depending on parameters defining preferences of said terminal (101), in particular regarding a resolution of said content.

14. A server (102) for conferencing in a computer, **wherein** said server (102) is adapted to host a conference, and to select a terminal (101) previously not connected to said conference to be invited to connect to said conference depending on information from a life feed of said conference and a predetermined event stored in a data base.

15. A computer program for conferencing in a computer network (100), **wherein** said computer program, when executed on a computer, causes the computer to select a terminal (101) previously not connected to a conference to be invited to connect to said conference hosted by a server (102) depending on information from a life feed of said conference and a predetermined event stored in a data base.

16. A computer program product for conferencing in a computer network (100) comprising a computer usable medium having a computer readable program, **wherein** said computer readable program, when executed on a computer, causes the computer to select a terminal (101) previously not connected to a conference to be invited to connect to said conference hosted by a server (102) depending on information from a life feed of said conference and a predetermined event stored in a data base.
